# EUROPEAN PATENT SPECIFICATION

(11) **EP 3 301 214 B1**
(45) Date of publication and mention of the grant of the patent: **19.12.2018**
(21) Application number: 17193352.6
(22) Date of filing: 27.09.2017
(51) Int. Cl.: D06F 33/02, G06F 1/32, D06F 39/00, A47L 15/00, H04B 1/16, H02J 9/00

(54) **ELECTRONIC EQUIPMENT AND CONTROL METHOD FOR THE SAME**
ELEKTRONISCHE AUSRÜSTUNG UND STEUERUNGSVERFAHREN DAFÜR
ÉQUIPEMENT ÉLECTRONIQUE ET SON PROCÉDÉ DE COMMANDE

(30) Priority: 28.09.2016 KR 20160124850
(43) Date of publication of application: 04.04.2018
(73) Proprietor: LG Electronics Inc., Seoul 07336 (KR)
(72) Inventor: HWANG, Jeongwon, Seoul 08592 (KR)
(74) Representative: Vossius & Partner Patentanwälte Rechtsanwälte mbB

(56) References cited:
- DE-A1-102008 040 744
- DE-A1-102008 042 832
- GB-A- 2 464 661
- JP-A- H0 787 570
- US-A- 4 531 237
- US-A- 6 085 017
- US-A1- 2003 176 928
- US-A1- 2011 080 210
- US-A1- 2014 042 819
- DATABASE WPI Week 201561 Thomson Scientific, London, GB; AN 2015-517500 XP002777597, -& JP 2015 159989 A (SHARP KK) 7 September 2015 (2015-09-07)

## Description

### BACKGROUND OF THE INVENTION

### Field of the Invention

The present invention relates to electronic equipment such as a laundry treating apparatus, a dishwasher or an oven, and a control method for the same.

### Discussion of the Related Art

Generally, a laundry treating apparatus refers to an apparatus for washing clothes, an apparatus for drying clothes, or an apparatus for performing both washing and drying of clothes, and a dishwasher refers to an apparatus for removing foreign matter from dishes by spraying water onto objects to be washed such as a tableware. An oven refers to an apparatus for heating cooking materials.

A laundry treating apparatus for washing clothes includes a tub for storing water, a drum rotatably provided in the tub to store clothes, a motor for rotating the drum, a water supply valve for controlling a channel through which water is supplied to the tub, and a drain pump for draining water stored in the tub. A laundry treating apparatus for drying laundry generally includes a drum for storing clothes, a motor for rotating the drum, and an air supply portion for supplying heated air to the drum.

The dishwasher generally includes a tub for accommodating an object to be washed, a spray arm for spraying water to an object to be washed, a pump for supplying water to the spray arm, a heater for heating the water supplied to the pump, and a drain pump for draining water stored in the tub. The oven generally includes a heater for heating a space for accommodating an object to heat such as a cooking material and a fan for circulating or discharging air from the space in which the object to heat is accommodated.

Some conventional electronic apparatuses having the above-described structure are remote controllable. Remote control means that, when a user outside a place having the electronic apparatuses transmits a control command to an individual electronic apparatus through a remote control terminal (cell phone or the like), the electronic device operates according to the received control command.

Conventionally, a remote control of an electronic apparatus requires electric power to remain supplied to all the components necessary for operation of each electronic apparatus. As such, when the user sends a control command to the electronic apparatus via the remote control terminal, the electronic apparatus may be operated immediately.

That is, the conventional electronic apparatus consumes a large amount of standby power since it can be controlled from the outside by the user only when power is kept supplied to the electronic apparatus (i.e., to all the components necessary for operation of each electronic apparatus).

US 2014 042 819 A1 discloses an electronic apparatus and a power management method are disclosed. The electronic apparatus includes a power board, a remote-controller receiving board and a mainboard. The power board is configured for converting public electricity into a standby voltage and a main power voltage. The remote-controller receiving board, coupled with the power board, is configured to be operated with the standby voltage. When the remote-controller receiving board receives a control signal from a remote controller, the remote-controller receiving board sends a power-switching signal to the power board. The power board starts or stops supplying the main power voltage according to the power-switching signal. The mainboard, coupled with the power board, is configured to be operated with the main power voltage.

US 2003 176 928 A1 provides a method of controlling an Internet washing machine, in which the electric power required to keep the Internet washing machine be in a remote-controllable state can be reduced. The method of controlling the Internet washing machine comprises the steps of counting down the remaining time from a point of time when the internet washing machine is turned on, starting a remote control mode by connecting an on-line server with the internet washing machine so that they are in a state of a session if an operating part does not work during the preset time, and starting a power saving mode if either the operating part does not work or a signal for remotely controlling the washing machine is not generated before the preset time from a point of time when the remote control mode is started.

DATABASE WPI, Week 201561, Thomson scientific, London, GB; AN 2015-517500; XP 002777597; JP 2015 159 989 A disclose a washing machine allowing the power consumption thereof to be reduced while always maintaining a state in which the washing machine can perform network communication. SOLUTION: The washing machine includes: a main microcomputer; peripheral configuration units including an operation load regarding washing; a sub microcomputer; a communication unit for performing communication with an information terminal via a network; a power supply device for supplying a power supply voltage; and a power supply control unit for controlling the supply of the power supply voltage from the power supply device to the main microcomputer and the peripheral configuration units. The sub microcomputer, the communication unit and the power supply control unit are always supplied with the power supply voltage from the power supply device when the washing machine is in a communication mode for performing communication by the communication unit. The power supply control unit stops the supply of the power supply voltage from the power supply device to the main microcomputer and the peripheral configuration units, when the washing machine is in a communication mode and also in a power saving mode in which a load is not controlled.

US 2011 080 210 A1 discloses a method for reducing a power consumption of a light-receiving device, while a power consumption of a microcomputer that controls the light-receiving device is reduced as well. The microcomputer is structured to include a drive circuit, a sampling/detection circuit, a timer, a system clock generation circuit, a CPU, a ROM and a RAM. The CPU stops providing the light-receiving device with a power supply by turning off a P channel type MOS transistor with the drive circuit and sets the microcomputer in a standby state for a predetermined period of time. When the microcomputer is released from the standby state, the CPU starts providing the light receiving device with the power supply by turning the P channel type MOS transistor on with the drive circuit.

DE10 2008 042 832 A1 describes an electric appliance, in particular for a dishwasher or washing machine, with a stand-by module for providing functions in a standby mode and a power supply module to supply the standby module during the standby mode with electrical power, the power supply module generated electric energy, a thermoelectric generator for producing electrical energy from waste heat (AWM, AWH) of the electrical appliance during a normal operation and an electrical energy store for storing by the thermoelectric generator in order to supply the standby module during the standby mode with the stored electrical energy.

US 6 085 017 A describes a current supply circuit for an electronic apparatus having standby, normal and economy modes of operation includes a remote control receiver which responds to a remote control signal from a remote control unit to select either mode of operation. A voltage source provides a main voltage which is detected to produce a switching voltage when the main voltage is present. The switching element of a voltage responsive switch is connected to a first input contact in the presence of the switching voltage and to a second input contact in the absence of the switching voltage. The output contact of the voltage responsive switch is connected to an input terminal of the remote control receiver and to a first input terminal of the filter. The output contact is selectively connected to the first and second input contacts in response to the respective presence and absence of the switching voltage to apply a first operating voltage to the first input contact in the presence of the switching voltage and a second operating voltage to the second input contact to place the current supply circuit into the economy mode of operation in the absence of the switching voltage.

DE10 2008 040 744 A1 relates to a household appliance, particularly a dishwasher or washing machine, at least comprising a control means for controlling electrical loads having device components of the household appliance during a program sequence. According to the invention it is provided that at least one switching means is provided for at least partially de-energizing the control device after the end of the program sequence.

JP H07 87570 A has the purpose to reduce the power consumption of the receiver of a remote control device. CONSTITUTION: The receiver of a remote control device is provided with a reception circuit receiving the remote control signal transmitted from a transmitter and a reception control circuit deciding the signal transmitted from the reception circuit. The remote control signal includes a trigger code, a reader code succeeding the trigger code and a specific code succeeding the reader code. When the reception control circuit intermittently switches the reception circuit which is in a non-operating state to an operating state and the circuit which is in the operating state receives the trigger code generated from the transmitter, the circuit maintains the reception circuit in an operating state for fixed time. Because the reception circuit is intermittently switched to the operating state by alternately switching the reception circuit to the operating state and the non-operating state till the trigger code is received, power consumption can be reduced.

US 4 531 237 A describes an energy-saving arrangement for a signal receiver that responds to intermittent incoming signals. The receiver is turned on periodically for short intervals so as to provide a low duty cycle during the standby intervals when there are no incoming signals. If an incoming signal is sensed during one of its "on" intervals, it remains on during the duration of the signal.

GB 2 464 661 A provides a power management apparatus comprises a field module configured to be coupled to an appliance (via a socket) and operable to measure a parameter indicative of an amount of power being consumed by the appliance. The field module comprises a wireless transmitter for transmitting a signal to a controller indicative of the amount of power being consumed by the appliance, the controller being configured to determine whether the amount of power being used by the appliance indicates that the appliance is in an idle condition or a standby condition. The controller is arranged to transmit a power termination signal to the field module when it is determined that the appliance is in the idle condition or the standby condition, the field module being arranged to terminate the supply of power to the appliance upon receipt of the power termination signal.

### SUMMARY OF THE INVENTION

Accordingly, the present invention is directed to electronic equipment and a control method for the same that substantially obviate one or more problems due to limitations and disadvantages of the related art.

An object of the present invention is to provide electronic equipment capable of minimizing consumption of standby power of a remotely controllable electronic apparatus and a control method for the same.

Another object of the present invention is to provide an electronic apparatus that is remotely controllable even when the user goes out without setting a remote control mode and a control method for the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method according to claim 1 is provided.

The present invention may further include a first controller power supply step of the second controller controlling the power input portion to supply power to the first controller when the control command transmitted from the remote control terminal is received by the communication portion during the communication portion power supply step, a load portion power supply step of the first controller controlling the load portion switch to supply power to the first load portion, and a first load portion operation step of the first controller controlling the first load portion to operating the first load portion according to the received control command.

The present invention may further include a step of the second controller controlling the power input portion and the communication portion switch to interrupt the power supplied to the first controller, the first load portion and the communication portion and re-executing the standby step when the first load portion operation step is completed.

The present invention may further include a step of re-executing the standby step when the first load portion operation step is completed, wherein the step of re-executing the standby step includes the steps of the first controller controlling the load portion switch to interrupt the power supplied to the first load portion, the second controller controlling the power input portion to interrupt the power supplied to the first controller, and the second controller controlling the communication portion switch to interrupt the power supplied to the communication portion.

The present invention includes a message transmission step of transmitting, to the remote control terminal, a message indicating that the communication portion is activated, during the communication portion power supply step.

The time information setting step may be performed through an input portion for receiving the control command from a user.

The time information setting step may be performed through the remote control terminal.

The time information setting step may further include setting a period of the activation time.

The present invention may further include the second controller changing the activation time and the deactivation time when a control command requesting change of the activation time and the deactivation time is received from the remote control terminal during the communication portion power supply step.

In another aspect of the present invention, an electronic apparatus according to claim 9 is provided.

The first load portion may include at least one of a motor for rotating a drum providing a space for accommodating clothes, a valve for opening or closing a water supply pipe connecting a space for accommodating the drum and a water supply source, and a drainage pump for draining water stored in the space for accommodating the drum.

The first load portion may include at least one of a motor for rotating a drum providing a space for accommodating clothes and an air supply portion for supplying heated air to the drum.

The first load portion may include at least one of a pump for spraying water onto an object to be washed and a heater for heating water supplied to the pump.

The first load portion may include at least one of a heater for heating a space for accommodating an object to be heated and a fan for circulating or discharging air in or from the space accommodating the object to be heated.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGs. 1 and 2 show a laundry treating apparatus which is an example of an electronic apparatus according to the present invention; and
FIG. 3 illustrates an example of a control method for an electronic apparatus according to the present invention.

### DETAILED DESCRIPTION OF THE INVENTION

Reference will now be made in detail to the preferred embodiments of the present invention, examples of which are illustrated in the accompanying drawings. It is to be understood that both the foregoing general description and the following detailed description are exemplary and explanatory only and are not restrictive of the scope of the invention. Wherever possible, the same reference numbers will be used throughout the drawings to refer to the same or like parts.

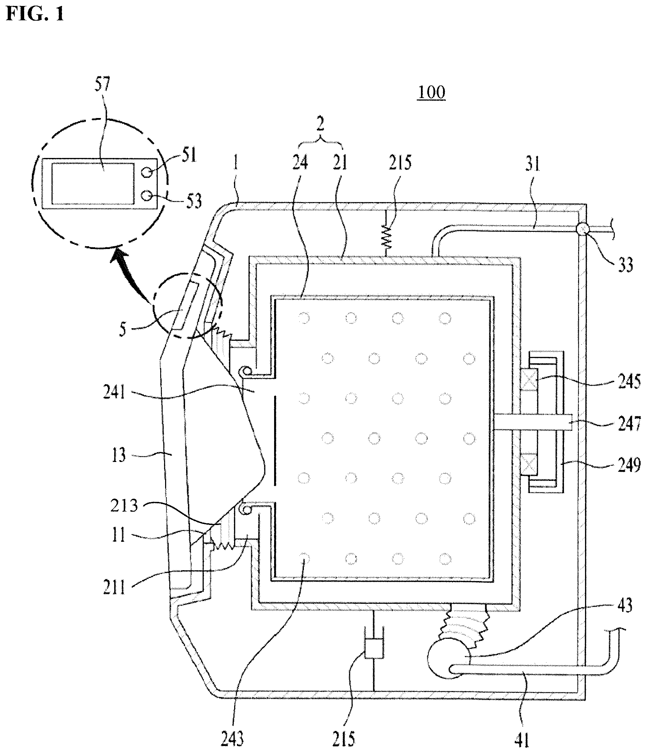

The present invention relates to an electronic apparatus that performs a unique function by receiving power and a control method for the same. FIG. 1 shows a laundry treating apparatus 100 for washing or drying clothes, which is an example of an electronic apparatus according to the present invention.

The laundry treating apparatus 100 includes a cabinet 1 and an accommodation portion 2 provided in the cabinet to provide a space for accommodating clothes.

The front face of the cabinet 1 is provided with an introduction port 11 for introducing clothing into the accommodation portion 2 or retrieving clothing stored in the drum. The introduction port is opened/closed by a door 13, which is rotatably fixed to the cabinet 1. The door 13 may be provided with a control panel 5 for receiving a control command from the user and displaying progress of the input control command.

When the laundry treating apparatus 100 of the present invention is configured as an apparatus for washing clothes, the accommodation portion 2 may include a tub 21 provided inside the cabinet 1 to provide a space for storing water, and a drum 24 rotatably provided in the drum 24 to provide a space for storing clothes.

The tub 21 may be provided with a tub introduction port 211 communicating with the introduction port 11. The introduction port 11 and the tub introduction port 211 may be connected to each other through a gasket 213.

The tub 21 is fixed to the inside of the cabinet 1 through a support portion 215. The support portion may include a spring for connecting the upper circumferential surface of the tub 21 to the cabinet 1, and a damper for connecting the lower circumferential surface of the tub to the bottom surface of the cabinet.

The tub 21 may be supplied with water through a water supply portion 31, 33, and the water stored in the tub may be discharged from the cabinet through the drainage portion 41, 43.

The water supply portion may include a water supply pipe 31 for connecting the tub and the water supply source and a valve 33 for opening and closing the water supply pipe, and the drainage portion may include a drainage pump 43 and a drain pipe 41 for guiding water discharged from the drainage pump to the outside of the cabinet.

The drum 24 includes a drum introduction port 241 communicating with the introduction port 11 and the tub introduction port 211, and a plurality of through holes 243 allowing the interior of the drum to communicate with the interior of the tub therethrough.

The drum 24 is rotated by a motor. The motor may include a stator 245 fixed to the back surface of the tub to form a rotating field when electric current is supplied thereto, a rotor 249 rotated by the rotating field, and a rotation shaft 247 for connecting the drum with the rotor through the tub.

When the laundry treating apparatus 100 of the present invention is configured as an apparatus for drying clothes, the accommodation portion 2 may be provided with only the drum 24 arranged inside the cabinet 1 to provide a space for storing clothes. In this case, an air supply portion for supplying heated air to the drum should be further provided in the cabinet. The air supply portion may include a supply duct for guiding external air into to the drum, a discharge duct for discharging the air from the drum, and a fan and a heater provided in the supply duct.

As described above, the door 13 may be provided with a control panel 5 for displaying a control command selectable by the user, receiving a control command from a user, and displaying the control command that is being executed by the laundry treating apparatus.

The controller 55 may include an input portion 53 for inputting a control command, and a display portion 57 for displaying progress of a control command selectable by the user and displaying the progress of the control command.

The loads (objects supplied with power from a power source to generate electric energy or mechanical energy) provided in the laundry treating apparatus 100 are supplied with the power through a power input portion 51. The power input portion 51 may include a switch for controlling opening and closing of a power supply circuit for connecting the power source and the loads. FIG. 1 illustrates an example in which the power input portion 51 is provided to the control panel 5.

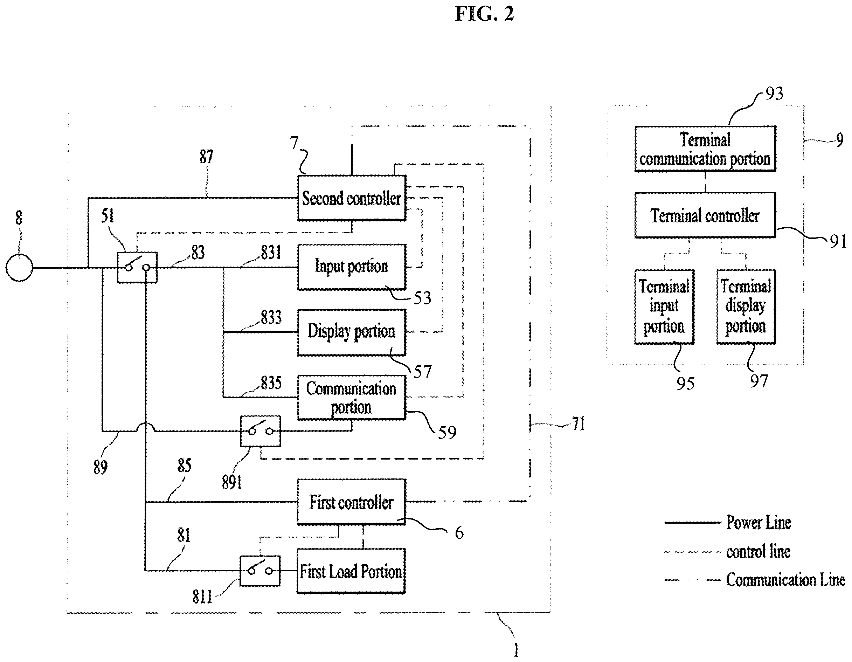

As shown in FIG. 2, the loads provided in the laundry treating apparatus 100 are configured to operate under control of a first controller 6 and a second controller 7.

The loads provided in the present invention include a stator 245 of the motor provided to rotate the drum 24, the valve 33 of the water supply portion, the drainage pump 43 of the drainage portion, the input portion 53 and the display portion 57 included in the control panel, and a communication portion 59. The loads may be divided into a load portion (a first load portion) controlled by the first controller 6 and a load portion (a second load portion) controlled by the second controller 7.

FIG. 2 illustrates a case where the first load portion includes the stator 245, the valve 33 and the drainage pump 43, and the second load portion includes the input portion 53, the display portion 57 and the communication portion 59.

The communication portion 59 is a means for communication with a remote control terminal 9 capable of remotely transmitting a control command. The remote control terminal 9 is a terminal (a cell phone or the like) capable of communicating with the laundry treating apparatus 100 through the communication portion 59.

The remote control terminal 9 may include a terminal communication portion 93 for communicating with the communication portion 59 included in the laundry treating apparatus, a terminal input portion 95 for inputting a control command for remote control, and a terminal display portion 97 for displaying information received through the terminal communication portion 93. In this case, the terminal communication portion 93, the terminal input portion 95 and the terminal display portion 97 may be controlled by a terminal controller 91.

Accordingly, a control command input to the remote control terminal 9 through the terminal input portion 95 may be transmitted to the laundry treating apparatus 100 through the terminal communication portion 93, and the information generated in the laundry treating apparatus 100 may be transmitted to the remote control terminal 9 through the communication portion 57.

The first controller 6 is set to control the first load portion, and the second controller 7 is set to control the second load portion. This is intended to allow the laundry treating apparatus 100 to receive a control command transmitted from the remote control terminal 9 even if the user goes out without setting a remote control mode and is also intended to minimize consumption of standby power in the laundry treating apparatus 100.

To obtain the aforementioned effect, the first controller 6 is connected to a power source 8 through a first controller power line 85, and the second controller is connected to the power source 8 through a second controller power line 87.

The first controller power line 85 is provided with a power input portion 51. When the power input portion 51 closes a power supply circuit formed by the first controller power line 85, the first controller 6 is supplied with power from the power source 8. When the power input portion 51 opens the power supply circuit formed by the first controller power line 85, the first controller 6 may not be supplied with power.

Meanwhile, the second controller power line 87 connects the power source 8 and the second controller 7 to each other, and is configured to constantly provide power to the second controller 7 irrespective of whether or not the power input portion 51 has opened or closed the first controller power line 85.

The first controller 6 and the second controller 7 are capable of communicating with each other through a communication line 71. That is, while power is supplied to the first controller 6, the second controller 7 may transmit a control signal to the first controller 6 through the communication line 71, and receive a control signal transmitted from the first controller 6.

The first load portion is connected to the power source 8 through a load portion power line 81. A power supply circuit formed by the load portion power line 81 is opened and closed by the power input portion 51 and a load portion switch 811.

That is, the first load portion is supplied with power when both the power input portion 51 and the load portion switch 811 close the load portion power line 81. If any one of the power input portion 51 and the load portion switch 811 opens the load portion power line 81, the first load portion cannot be supplied with power. The first load portion and the load portion switch 811 are controlled by the first controller 6.

The input portion 53 and the display portion 57 included in the control panel 5 are connected to the power source 8 through a panel power line 83 (a second load portion power line), which is opened and closed by the power input portion 51. Here, the input portion 53 is connected to the power source 8 through an input portion power line 831, and the display portion 57 is connected to the power source 8 through a display portion power line 833.

The communication portion 59 may be configured to be supplied with power through a communication portion power line 89 (a first communication portion power line) and a second communication portion power line 835. A power supply circuit formed by the communication portion power line 89 is opened and closed by the communication portion switch 891, and a power supply circuit formed by the second communication portion power line 835 is opened and closed by the power input portion 51.

The communication portion switch 891 opens and closes the communication portion line 89 according to a control signal of the second controller 7. Accordingly, the communication portion 59 may be supplied with power when the power input portion 51 closes the second communication portion power line 835 or when the second controller 7 closes the communication portion power line 89 through the communication portion switch 891.

The panel power line 83, the first controller power line 85, and the load portion power line 81 may be simultaneously opened or closed through the power input portion 51. The power input portion 51 may be operated by the user or by the second controller 7.

That is, the power input portion 51 may be configured as a switch for controlling opening and closing of the power supply circuit for connecting the power source and the loads, and therefore the user may press the power input portion 51 provided to the control panel 5 to supply power to the loads. According to the present invention, even if the user does not press the power input portion 51, the second controller 7 may control the power input portion 51 to supply power to the loads.

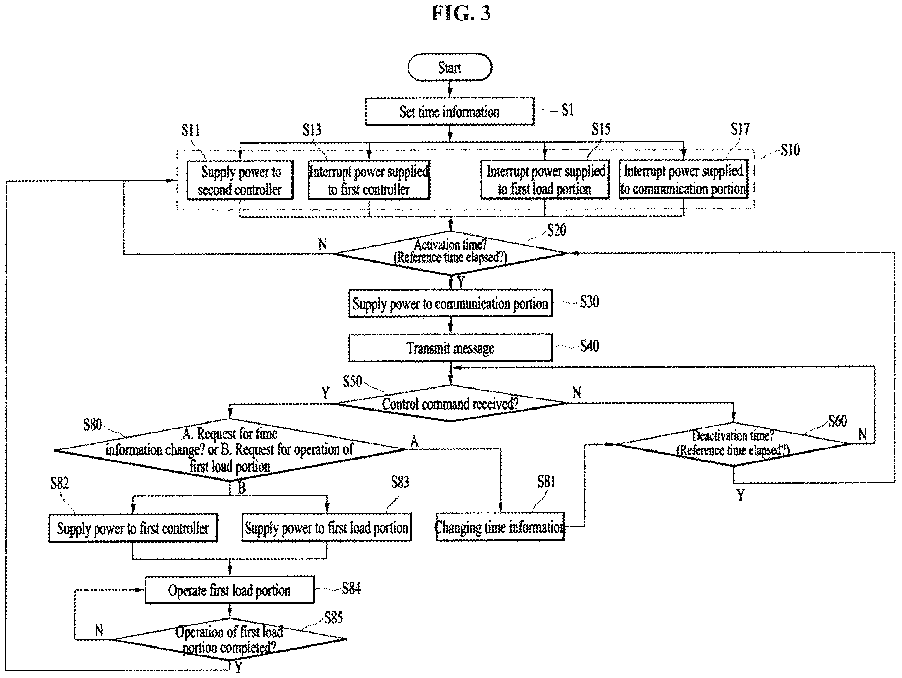

FIG. 3 illustrates an example of a control method for a laundry treating apparatus having the structure described above.

The control method of the present invention includes a time information setting step S1 of setting an activation time for supplying power to the communication portion 59 and a deactivation time for interrupting power supplied to the communication portion 59, a standby step S10 of supplying power to the second controller 7 and interrupting power to the other loads of the laundry treating apparatus, and a communication portion power supply step S30 of supplying power to the communication portion 59 according to the time information input through the time information setting step S30.

The time information setting step S1 may be configured to allow the user to directly input the activation time and the deactivation time through the input portion 53 or to input the activation time and the deactivation time through the terminal input portion 95 provided to the remote control terminal 9.

When the time information setting step S1 is performed through the input portion 53, the user may need to input time information through the input portion 53 after supplying power to the laundry treating apparatus 100 through the power input portion 51.

The time information (the activation time and the deactivation time) set in the time information setting step S1 is a concept that includes not only information about the time at which power is supplied to the communication portion but also a period of supplying power to the communication portion. Thereby, the time information setting step S1 may include only a step of setting the activation time and the deactivation time, only a step of setting a reference period for supplying power to the communication portion, both the step of setting the activation time and the deactivation time and the step of setting the period of activation times.

The standby step S10 includes step S11 of supplying power to the second controller 7 through the second controller power line 87, a first controller power supply interruption step S13 of interrupting the power supplied to the first controller 6, a first load portion power supply interruption step S15 of interrupting power supplied to the first load portion, and a communication portion power supply interruption step S17 of interrupting power supplied to the communication portion 59.

The first controller power supply interruption step S13 and the first load portion power supply interruption step S15 are performed while the power input portion 51 maintains a power supply circuit formed by the first controller power line 85 and the load portion power line 81 in an open state.

When the control method of the present invention is applied to the laundry treating apparatus 100, the first load portion may be a concept including at least one of the stator 245 of a motor for rotating the drum 24, the valve 33 for opening or closing the water supply pipe 31 for supplying water to the tub, the drainage pump 43 for draining water stored in the tub 21, and an air supply portion (not shown) for supplying heated air to the drum 24.

The communication portion power supply interruption step S17 is performed as the power input portion 51 opens the power supply circuit formed by the second communication portion power line 835 and the communication portion switch 891 opens the power supply circuit formed by the communication portion power line 89.

The communication portion power supply step S30 is initiated when the activation time set through the time information input step S1 arrives during the standby step S10. Alternatively, the communication portion power supply step S30 may be set to be initiated when the progress time of the standby step S10 reaches the reference period set through the time information input step S1.

The communication portion power supply step S30 is a step of supplying power to the communication portion 59 through the communication portion power line 89. In the communication portion power supply step S30, the second controller 7 controls the communication portion switch 891 to close the communication portion power line 89.

When power is supplied to the communication portion 59, the present invention performs step S50 of determining whether a control command transmitted from the remote control terminal 9 is received by the communication portion 59 for a predetermined reference time (S60).

When the time information setting step S1 is provided as a step of setting an activation time and a deactivation time, the reference time may be defined as a difference between the activation time and the deactivation time. When the time information setting step S1 is provided as a step of setting a reference period, the reference time may be defined as a time for which the power supplied to the communication portion is maintained.

If a control command transmitted from the remote control terminal 9 is not received by the communication portion 59 (S60) before the deactivation time arrives (within the reference time) after power is supplied to the communication portion (S30), the present invention re-executes the standby step S10 by interrupting power supplied to the communication portion 59.

However, if a control command transmitted from the remote control terminal 9 is received by the communication portion 59 before the deactivation time arrives (within the reference time) after power is supplied to the communication portion (S30), the control method of the present invention changes the time information (S81), and then performs step S60 of determining whether the reference time has elapsed.

In other words, if the control command received by the communication portion 59 is a request for change of the time information (the activation time and deactivation time, or the reference period) (A), the control method of the present invention changes the time information (S81), and then performs step S60 of determining whether the reference time has passed.

The user may change the time information through the terminal input portion 95 provided in the remote control terminal 9. When the communication portion 57 receives the information about the activation time and the deactivation time (or a reference period) sent from the terminal communication portion 93, the second controller 7 may determine that a request for change of the time information has been made.

If the control command received by the communication portion 59 is a signal requesting operation of the first load portion (B), the control method of the present invention performs step S82 of supplying power to the first controller 6 and step S83 of supplying power to the first load portion.

The step S82 of supplying power to the first controller 6 is performed as the second controller 7 closes, through the power input portion 51, the power supply circuit formed by the first controller power line 85.

The step S83 of supplying power to the first load is performed as the first controller 6 controls the load portion switch 811 to close the power supply circuit formed by the load portion power line 81.

When power is supplied to the first controller 6 and the first load portion, the control method of the present invention performs step S84 of operating the first load portion according to the control command received through the communication portion 59.

Once the first load portion operation step S84 is completed (S85), the present invention re-executes the standby step. That is, once the first load portion operation step is completed (S85), the present invention interrupts the power supplied to the first controller 6, the first load portion and the communication portion 59, and maintains power supplied to the second controller 7.

The step of re-executing the standby step may include a step of the second controller 7 controlling the power input portion 51 to interrupt the power supplied to the first controller 6 and the first load portion, and a step of the second controller 7 controlling the communication portion switch 891 to interrupt the power supplied to the communication portion 59.

Alternatively, the step of re-executing the standby step may be configured to sequentially perform a step of the first controller 6 controlling the load portion switch 811 to interrupt the power supplied to the first load portion, a step of the second controller 7 controlling the power input portion 51 to interrupt the power supplied to the first controller 6, and a step of the second controller 7 controlling the communication portion switch 891 to interrupt the power supplied to the communication portion 59.

According to the present invention, even if the user goes out without setting the remote control mode (i.e., without the power being supplied to the first load portion and the second load portion through the power input portion), the communication portion 59 is set to communicate with the remote control terminal 9 according to the preset time information. Thereby, with the present invention, even if the user leaves without setting the remote control mode, the user may remotely control the laundry treating apparatus. Therefore, the amount of standby power consumed by the laundry treating apparatus may be minimized.

To maximize the above-mentioned effect, the control method of the present invention includes a message transmission step S40 of transmitting a message indicating that the communication portion 59 is in the activated state to the remote control terminal 9 every time power is supplied to the communication portion (S30).

The message transmission step S40 is effective in that the user is guided for remote control. However, the message transmission step S40 may be an inconvenient step of forcing the user to receive an unnecessary message if the user does not desire remote control. In this case, the user may address the inconvenience by modifying the time information through the time information change step S81.

While a description has been given of a case where the electronic apparatus and the control method for the same according to an embodiment are applied to the laundry treating apparatus 100, it should be noted that the present invention is also applicable to electronic apparatuses such as dishwashers and ovens.

When the present invention is applied to a dishwasher, the concept of the first load portion among the features described above may need to be modified to include at least one of a pump for spraying water onto an object to be washed and a heater for heating water supplied to the pump.

When the present invention is applied to an oven, the concept of the first load portion among the features described above may need to be modified to include at least one of a heater for heating a space for accommodating an object to be heated and a fan for circulating or discharging air in or from the space accommodating the object to be heated.

As apparent from the above description, the present invention has effects as follows.

The present invention provides electronic equipment capable of minimizing consumption of standby power of a remotely controllable apparatus and a control method for the same.

In addition, the present invention provides an electronic apparatus that is remotely controllable even when the user goes out without setting a remote control mode and a control method for the same.

## Claims

1. A method of controlling an electronic apparatus including:
a first load portion for receiving power from a power source (8) and generating electrical or mechanical energy; a first controller (6) for controlling the first load portion; a communication portion (59) capable of communicating with a remote control terminal (9) capable of remotely transmitting a control command; a power input portion (53) for simultaneously opening and closing a first controller power line (85) for connecting the power source and the first load portion and a load portion power line (81) for connecting the power source (8) and the first load portion; a communication portion power line (835) for connecting the power source (8) and the communication portion (59), the communication portion power line (835) being opened and closed through a communication portion switch (891); a load portion switch (811) for opening and closing the load portion power line (81), the load portion switch (811) being controlled by the first controller (6); a second controller (7) for controlling the communication portion (59) and the communication portion switch (891), the second controller (7) being capable of communicating with the first controller (6); and a second controller power line (87) for connecting the power source (8) and the second controller (7) such that power is constantly supplied to the second controller (7), the method comprising:
a time information setting step (S1) of the second controller (7) receiving an activation time for supplying power to the communication portion (59) and a deactivation time for interrupting the power supplied to the communication portion (59);
a standby step (S10) of interrupting (S13, S15, S17) the power supplied to the first controller, the first load portion and the communication portion, and supplying (S11) power to the second controller;
a communication portion power supply step (S30) of the second controller controlling the communication portion switch to supply power to the communication portion when the activation time arrives;
a message transmission step (S40) of transmitting, to the remote control terminal (9), a message indicating that the communication portion (59) is activated, during the communication portion power supply step (S30); and
a step of waiting until the deactivation time is reached or until the control command transmitted from the remote control terminal (9) is received and interrupting the power supplied to the communication portion (59) and re-executing the standby step when the control command transmitted from the remote control terminal (9) is not received (S50) until the deactivation time is reached.

2. The method according to claim 1, further comprising:
a first controller power supply step (S82) of the second controller controlling the power input portion to supply power to the first controller when the control command transmitted from the remote control terminal is received by the communication portion during the communication portion power supply step;
a load portion power supply step (S83) of the first controller controlling the load portion switch to supply power to the first load portion; and
a first load portion operation step (S84) of the first controller controlling the first load portion to operating the first load portion according to the received control command.

3. The method according to claim 2, further comprising:
a step of the second controller controlling the power input portion and the communication portion switch to interrupt the power supplied to the first controller, the first load portion and the communication portion and re-executing the standby step when the first load portion operation step is completed (S85).

4. The method according to claim 2, or 3, further comprising:
a step of re-executing the standby step when the first load portion operation step is completed,
wherein the step of re-executing the standby step comprises the steps of:
the first controller controlling the load portion switch to interrupt (S15) the power supplied to the first load portion;
the second controller controlling the power input portion to interrupt (S13) the power supplied to the first controller; and
the second controller controlling the communication portion switch to interrupt (S17) the power supplied to the communication portion.

5. The method according to any one of claims 1 to 4, wherein the time information setting step (S1) is performed through an input portion for receiving the control command from a user.

6. The method according to any one of claims 1 to 4, wherein the time information setting step (S1) is performed through the remote control terminal.

7. The method according to any on of claims 1 to 6, wherein the time information setting step (S1) further comprises:
setting a period of the activation time.

8. The method according to any one of claims 1 to 7, further comprising:
the second controller changing the activation time and the deactivation time when a control command requesting change of the activation time and the deactivation time is received from the remote control terminal during the communication portion power supply step.

9. An electronic apparatus capable of performing remote control through a remote control terminal capable of remotely transmitting a control command, the electronic apparatus comprising:
a first load portion for receiving power from a power source (8) and generating electrical or mechanical energy;
a first controller (6) for controlling the first load portion;
an input portion (53) for inputting a control command;
a power input portion (51) for simultaneously opening and closing a first controller power line (85) for connecting the power source (8) and the first controller (6) and a load portion power line (81) for connecting the power source (8) and the first load portion;
a communication portion (59) for communicating with the remote control terminal;
a communication portion switch (891) for opening and closing a communication portion power line (835) for connecting the power source (8) and the communication portion (59);
a load portion switch (811) for opening and closing the load portion power line (81), the load portion switch (811) being controlled by the first controller (6); and
a second controller (7) for constantly receiving power from the power source (8) through a second controller power line (87) and controlling the communication portion (59), the communication portion switch (891) and the input portion (53), the second controller (7) being capable of communicating with the first controller (6),
wherein, when power is not supplied to the first controller (6) and a first load portion through the power input portion (51), the second controller (7) is configured to supply power to the communication portion (59) for a time from an activation time to a deactivation time, the activation time and the deactivation time being input through the input portion (53) or the remote control terminal (9),
wherein the second controller (7) transmits, to the remote control terminal (9), a message indicating that the communication portion is activated, during the communication portion power supply step.

10. The electronic apparatus according to claim 9, wherein the first load portion comprises at least one of a motor for rotating a drum (24) providing a space for accommodating clothes, a valve for opening or closing a water supply pipe (31) connecting a space for accommodating the drum (24) and a water supply source, and a drainage pump (43) for draining water stored in the space for accommodating the drum.

11. The electronic apparatus according to claim 9, wherein the first load portion comprises at least one of a motor for rotating a drum (24) providing a space for accommodating clothes and an air supply portion for supplying heated air to the drum (24).

12. The electronic apparatus according to claim 9, the first load portion comprises at least one of a pump for spraying water onto an object to be washed and a heater for heating water supplied to the pump.

13. The electronic apparatus according to claim 9, wherein the first load portion comprises at least one of a heater for heating a space for accommodating an object to be heated and a fan for circulating or discharging air in or from the space accommodating the object to be heated.

## Patentansprüche

1. Verfahren zum Steuern einer elektronischen Vorrichtung, die aufweist:
einen ersten Lastabschnitt zum Aufnehmen von Strom aus einer Stromquelle (8) und zum Erzeugen elektrischer oder mechanischer Energie; eine erste Steuereinrichtung (6) zum Steuern des ersten Lastabschnitts; einen Kommunikationsabschnitt (59), der zum Kommunizieren mit einem Fernsteuerendgerät (9) imstande ist, das zum Fernübertragen eines Steuerbefehls imstande ist; einen Stromeingangsabschnitt (53) zum gleichzeitigen Öffnen und Schließen einer Stromleitung (85) für die erste Steuereinrichtung zum Verbinden der Stromquelle und des ersten Lastabschnitts und einer Stromleitung (81) für den Lastabschnitt zum Verbinden der Stromquelle (8) und des ersten Lastabschnitts; eine Stromleitung (835) für den Kommunikationsabschnitt zum Verbinden der Stromquelle (8) und des Kommunikationsabschnitts (59), wobei die Stromleitung (835) für den Kommunikationsabschnitt durch einen Kommunikationsabschnittsschalter (891) geöffnet und geschlossen wird; einen Lastabschnittsschalter (811) zum Öffnen und Schließen der Stromleitung (81) für den Lastabschnitt, wobei der Lastabschnittsschalter (811) durch die erste Steuereinrichtung (6) gesteuert wird; eine zweite Steuereinrichtung (7) zum Steuern des Kommunikationsabschnitts (59) und des Kommunikationsabschnittsschalters (891), wobei die zweite Steuereinrichtung (7) zum Kommunizieren mit der ersten Steuereinrichtung (6) imstande ist; und eine Stromleitung (87) für die zweite Steuereinrichtung zum Verbinden der Stromquelle (8) und der zweiten Steuereinrichtung (7), so dass der zweiten Steuereinrichtung (7) konstant Strom zugeführt wird, wobei das Verfahren aufweist:
einen Einstellschritt (S1) von Zeitinformationen der zweiten Steuereinrichtung (7), der eine Einschaltzeit zum Zuführen von Strom zum Kommunikationsabschnitt (59) und eine Ausschaltzeit zum Unterbrechen des dem Kommunikationsabschnitt (59) zugeführten Stroms aufweist;
einen Bereitschaftsschritt (S10) zum Unterbrechen (S13, S15, S17) des der ersten Steuereinrichtung, dem ersten Lastabschnitt und dem Kommunikationsabschnitt zugeführten Stroms, und zum Zuführen (S11) von Strom zur zweiten Steuereinrichtung;
einen Schritt (S30) zur Stromversorgung des Kommunikationsabschnitts der zweiten Steuereinrichtung, die den Kommunikationsabschnittsschalter steuert, dem Kommunikationsabschnitt Strom zuzuführen, wenn die Einschaltzeit eintritt;
einen Nachrichtenübertragungsschritt (S40) zum Übertragen einer Nachricht an das Fernsteuerendgerät (9), die anzeigt, dass der Kommunikationsabschnitt (59) eingeschaltet ist, während Schritts (S30) zur Stromversorgung des Kommunikationsabschnitts; und
einen Schritt zum Warten, bis die Ausschaltzeit erreicht ist oder bis der vom Fernsteuerendgerät (9) übertragene Steuerbefehl empfangen wird, und zum Unterbrechen des dem Kommunikationsabschnitt (59) zugeführten Stroms und zum erneuten Ausführen des Bereitschaftsschritts, wenn der vom Fernsteuerendgerät (9) übertragene Steuerbefehl nicht empfangen wird (S50), bis die Ausschaltzeit erreicht wird.

2. Verfahren nach Anspruch 1, das ferner aufweist:
einen ersten Schritt (S82) zur Stromversorgung der Steuereinrichtung der zweiten Steuereinrichtung, die den Stromeingangsabschnitt steuert, der ersten Steuereinrichtung Strom zuzuführen, wenn der vom Fernsteuerendgerät übertragene Steuerbefehl durch den Kommunikationsabschnitt während des Schritts zur Stromversorgung des Kommunikationsabschnitts empfangen wird;
einen Schritt (S83) zur Stromversorgung des Lastabschnitts der ersten Steuereinrichtung, die den Lastabschnittsschalter steuert, dem ersten Lastabschnitt Strom zuzuführen; und
einen ersten Schritt (S84) zum Betreiben des Lastabschnitts der ersten Steuereinrichtung, die den ersten Lastabschnitt steuert, den ersten Lastabschnitt gemäß dem empfangenen Steuerbefehl zu betreiben.

3. Verfahren nach Anspruch 2, das ferner aufweist:
einen Schritt der zweiten Steuereinrichtung, die den Stromeingangsabschnitt und den Kommunikationsabschnittsschalter steuert, den der ersten Steuereinrichtung, dem ersten Lastabschnitt und dem Kommunikationsabschnitt zugeführten Stroms zu unterbrechen und den Bereitschaftsschritt erneut auszuführen, wenn der Schritt zum Betreiben des ersten Lastabschnitts beendet ist (S85).

4. Verfahren nach Anspruch 2, oder 3, das ferner aufweist:
einen Schritt zum erneuten Ausführen des Bereitschaftsschritts, wenn der Schritt zum Betreiben des ersten Lastabschnitts beendet ist,
wobei der Schritt zum erneuten Ausführen des Bereitschaftsschritts die Schritte aufweist:
Steuern durch die erste Steuereinrichtung des Lastabschnittsschalters, den dem ersten Lastabschnitt zugeführten Strom zu unterbrechen (S15);
Steuern durch die zweite Steuereinrichtung des Stromeingangsabschnitts, den der ersten Steuereinrichtung zugeführten Strom zu unterbrechen (S13); und
Steuern durch die zweite Steuereinrichtung des Kommunikationsabschnittsschalters, den dem Kommunikationsabschnitt zugeführten Strom zu unterbrechen (S17).

5. Verfahren nach einem der Ansprüche 1 bis 4, wobei der Einstellschritt (S1) von Zeitinformationen durch einen Eingabeabschnitt zum Empfangen eines Steuerbefehls von einem Benutzer ausgeführt wird.

6. Verfahren nach einem der Ansprüche 1 bis 4, wobei der Einstellschritt (S1) von Zeitinformationen durch das Fernsteuerendgerät ausgeführt wird.

7. Verfahren nach einem der Ansprüche 1 bis 6, wobei der Einstellschritt (S1) von Zeitinformationen ferner aufweist:
Einstellen einer Zeitspanne der Einschaltzeit.

8. Verfahren nach einem der Ansprüche 1 bis 7, das ferner aufweist:
Ändern durch die zweite Steuereinrichtung der Einschaltzeit und der Ausschaltzeit, wenn ein Steuerbefehl, der eine Änderung der Einschaltzeit und der Ausschaltzeit fordert, vom Fernsteuerendgerät während des Schritts zur Stromversorgung des Kommunikationsabschnitts empfangen wird.

9. Elektronische Vorrichtung, die zum Durchführen einer Fernsteuerung durch ein Fernsteuerendgerät imstande ist, das zum Fernübertragen eines Steuerbefehls imstande ist, wobei die elektronische Vorrichtung aufweist:
einen ersten Lastabschnitt zum Aufnehmen von Strom aus einer Stromquelle (8) und zum Erzeugen von elektrischer oder mechanischer Energie;
eine erste Steuereinrichtung (6) zum Steuern des ersten Lastabschnitts;
einen Eingabeabschnitt (53) zum Eingeben eines Steuerbefehls;
einen Stromeingangsabschnitt (51) zum gleichzeitigen Öffnen und Schließen einer Stromleitung (85) für die erste Steuereinrichtung zum Verbinden der Stromquelle (8) und der ersten Steuereinrichtung (6) und einer Stromleitung (81) für den Lastabschnitt zum Verbinden der Stromquelle (8) und des ersten Lastabschnitts;
einen Kommunikationsabschnitt (59) zum Kommunizieren mit dem Fernsteuerendgerät;
einen Kommunikationsabschnittsschalter (891) zum Öffnen und Schließen einer Stromleitung (835) für den Kommunikationsabschnitt zum Verbinden der Stromquelle (8) und des Kommunikationsabschnitts (59);
einen Lastabschnittsschalter (811) zum Öffnen und Schließen der Stromleitung (81) für den Lastabschnitt, wobei der Lastabschnittsschalter (811) durch die erste Steuereinrichtung (6) gesteuert wird; und
eine zweite Steuereinrichtung (7) zum konstanten Aufnehmen von Strom aus der Stromquelle (8) durch eine Stromleitung (87) für die zweite Steuereinrichtung und Steuern des Kommunikationsabschnitts (59), des Kommunikationsabschnittsschalters (891) und des Eingabeabschnitts (53), wobei die zweite Steuereinrichtung (7) zum Kommunizieren mit der ersten Steuereinrichtung (6) imstande ist,
wobei dann, wenn der ersten Steuereinrichtung (6) und einem ersten Lastabschnitt durch den Stromeingangsabschnitt (51) kein Strom zugeführt wird, die zweite Steuereinrichtung (7) konfiguriert ist, dem Kommunikationsabschnitt (59) für eine Zeit von einer Einschaltzeit bis zu einer Ausschaltzeit Strom zuzuführen, wobei die Einschaltzeit und die Ausschaltzeit durch den Eingabeabschnitt (53) oder das Fernsteuerendgerät (9) eingegeben werden,
wobei die zweite Steuereinrichtung (7) während des Schritts zur Stromversorgung des Kommunikationsabschnitts eine Nachricht an das Fernsteuerendgerät (9) überträgt, die anzeigt, dass der Kommunikationsabschnitt eingeschaltet ist.

10. Elektronische Vorrichtung nach Anspruch 9, wobei der erste Lastabschnitt einen Motor zum Drehen einer Trommel (24), die einen Raum zum Aufnehmen von Kleidung bereitstellt, und/oder ein Ventil zum Öffnen oder Schließen einer Wasserzufuhrleitung (31), die einen Raum zum Aufnehmen der Trommel (24) und eine Wasserzufuhrquelle verbindet, und/oder eine Ablaufpumpe (43) zum Ablassen von Wasser aufweist, das im Raum zum Aufnehmen der Trommel gespeichert ist.

11. Elektronische Vorrichtung nach Anspruch 9, wobei der erste Lastabschnitt einen Motor zum Drehen einer Trommel (24), die einen Raum zum Aufnehmen von Kleidung bereitstellt und/oder einen Luftzufuhrabschnitt zum Zuführen von erwärmter Luft zur Trommel (24) aufweist.

12. Elektronische Vorrichtung nach Anspruch 9, wobei der erste Lastabschnitt eine Pumpe zum Sprühen von Wasser auf ein zu waschendes Objekt und/oder eine Heizvorrichtung zum Erwärmen von Wasser aufweist, das der Pumpe zugeführt wird.

13. Elektronische Vorrichtung nach Anspruch 9, wobei der erste Lastabschnitt eine Heizvorrichtung zum Erwärmen eines Raums zum Aufnehmen eines zu erwärmenden Objekts und/oder ein Gebläse zum Umwälzen oder Ausstoßen von Luft im oder aus dem Raum aufweist, der das zu erwärmende Objekt aufnimmt.

## Revendications

1. Procédé de commande d'un appareil électronique, comprenant :
une première partie de charge pour la réception d'énergie d'une source d'alimentation (8) et la génération d'une énergie électrique ou mécanique ; un premier dispositif de commande (6) pour la commande de la première partie de charge ; une partie de communication (59) apte à communiquer avec un terminal de commande à distance (9) pouvant transmettre une instruction de commande à distance ; une partie d'alimentation électrique (53) pour l'activation et la désactivation simultanément d'une ligne de courant (85) du premier dispositif de commande connectant la source d'alimentation et la première partie de charge et d'une ligne de courant (81) de partie de charge connectant la source d'alimentation (8) et la première partie de charge ; une ligne de courant (835) de partie de communication connectant la source d'alimentation (8) et la partie de communication (59), la ligne de courant (835) de partie de communication étant activée et désactivée par un commutateur (891) de partie de communication ; un commutateur (811) de partie de charge pour l'activation et la désactivation de la ligne de courant (81) de partie de charge, ledit commutateur (811) de partie de charge étant commandé par le premier dispositif de commande (6) ; un deuxième dispositif de commande (7) pour la commande de la partie de communication (59) et du commutateur (891) de partie de communication, ledit deuxième dispositif de commande (7) étant apte à communiquer avec le premier dispositif de commande (6) ; et une deuxième ligne de courant (87) de dispositif de commande connectant la source d'alimentation (8) et le deuxième dispositif de commande (7) de manière à alimenter constamment en courant le deuxième dispositif de commande (7), ledit procédé comprenant :
une étape de réglage d'informations temporelles (S1) du deuxième dispositif de commande (7) recevant un temps d'activation pour alimenter en courant la partie de communication (59) et un temps de désactivation pour interrompre l'alimentation en courant de la partie de communication (59) ; une étape de mise en veille (S10) interrompant (S13, S15, S17) l'alimentation en courant du premier dispositif de commande, de la première partie de charge et de la partie de communication, et alimentant en courant (S11) le deuxième dispositif de commande ;
une étape d'alimentation en courant de partie de communication (S30) du deuxième dispositif de commande commandant le commutateur de partie de communication pour alimenter en courant la partie de communication quand arrive le temps d'activation ;
une étape de transmission de message (S40) où est transmis au terminal de commande à distance (9) un message indiquant que la partie de communication (59) est activée, pendant l'étape d'alimentation en courant de partie de communication (S30) ; et
une étape d'attente jusqu'à ce que le temps de désactivation soit atteint ou jusqu'à ce que l'instruction de commande transmise par le terminal de commande à distance (9) soit reçue, et d'interruption de l'alimentation en courant de la partie de communication (59) et de réexécution de l'étape de mise en veille quand l'instruction de commande transmise par le terminal de commande à distance (9) n'est pas reçue (S50), jusqu'à ce que le temps de désactivation soit atteint.

2. Procédé selon la revendication 1, comprenant en outre :
une étape d'alimentation en courant du premier dispositif de commande (S82) du deuxième dispositif de commande commandant la partie d'alimentation électrique pour alimenter en courant le premier dispositif de commande quand l'instruction de commande transmise par le terminal de commande à distance est reçue par la partie de communication pendant l'étape d'alimentation en courant de partie de communication ;
une étape d'alimentation en courant de la partie de charge (S83) du premier dispositif de commande commandant le commutateur de partie de charge pour alimenter en courant la première partie de charge ; et
une étape de mise en service de la première partie de charge (S84) du premier dispositif de commande commandant la première partie de charge pour mettre en service la première partie de charge conformément à l'instruction de commande reçue.

3. Procédé selon la revendication 2, comprenant en outre :
une étape du deuxième dispositif de commande commandant la partie d'alimentation électrique et le commutateur de partie de communication pour interrompre l'alimentation en courant du premier dispositif de commande, de la première partie de charge et de la partie de communication, et de réexécution de l'étape de mise en veille quand l'étape de mise en service de la première partie de charge est achevée (S85).

4. Procédé selon la revendication 2 ou la revendication 3, comprenant en outre :
une étape de réexécution de l'étape de mise en veille quand l'étape de mise en service de la première partie de charge est achevée,
l'étape de de réexécution de l'étape de mise en veille comprenant les étapes suivantes :
le premier dispositif de commande commandant le commutateur de partie de charge interrompt (S 15) l'alimentation en courant de la première partie de charge ;
le deuxième dispositif de commande commandant la partie d'alimentation électrique interrompt (S13) l'alimentation en courant du premier dispositif de commande ; et
le deuxième dispositif de commande commandant le commutateur de partie de communication interrompt (S 17) l'alimentation en courant de la partie de communication.

5. Procédé selon l'une des revendications 1 à 4, où l'étape de réglage d'informations temporelles (S1) est exécutée par une partie d'entrée pour recevoir l'instruction de commande d'un utilisateur.

6. Procédé selon l'une des revendications 1 à 4, où l'étape de réglage d'informations temporelles (S1) est exécutée par le terminal de commande à distance.

7. Procédé selon l'une des revendications 1 à 6, où l'étape de réglage d'informations temporelles (S1) comprend en outre : le réglage d'une plage de temps d'activation.

8. Procédé selon l'une des revendications 1 à 7, comprenant en outre :
le deuxième dispositif de commande varie le temps d'activation et le temps de désactivation quand une instruction de commande demandant un changement de temps d'activation et de temps de désactivation est reçue du terminal de commande à distance pendant l'étape d'alimentation en courant de partie de communication.

9. Appareil électronique apte à exécuter une commande à distance par un terminal de commande à distance pouvant transmettre une instruction de commande à distance, ledit appareil électronique comprenant :
une première partie de charge pour la réception d'énergie d'une source d'alimentation (8) et la génération d'une énergie électrique ou mécanique ;
un premier dispositif de commande (6) pour la commande de la première partie de charge ;
une partie d'entrée (53) pour l'entrée d'une instruction de commande ;
une partie d'alimentation électrique (51) pour l'activation et la désactivation simultanément d'une ligne de courant (85) du premier dispositif de commande connectant la source d'alimentation (8) et le premier dispositif de commande (6) et une ligne de courant (81) de partie de charge connectant la source d'alimentation (8) et la première partie de charge ;
une partie de communication (59) pour communiquer avec le terminal de commande à distance ;
un commutateur (891) de partie de communication pour l'activation et la désactivation d'une ligne de courant (835) de partie de communication afin de connecter la source d'alimentation (8) et la partie de communication (59) ;
un commutateur (811) de partie de charge pour l'activation et la désactivation de la ligne de courant (81) de partie de charge, le commutateur (811) de partie de charge étant commandé par le premier dispositif de commande (6) ; et
un deuxième dispositif de commande (7) pour l'alimentation en courant constante depuis la source d'alimentation (8) par une deuxième ligne de courant (87) de dispositif de commande, commandant la partie de communication (59), le commutateur (891) de partie de communication et la partie d'entrée (53), ledit deuxième dispositif de commande (7) étant apte à communiquer avec le premier dispositif de commande (6),
où, quand le premier dispositif de commande (6) et une première partie de charge ne sont pas alimentés en courant par la partie d'alimentation électrique (51), le deuxième dispositif de commande (7) est prévu pour alimenter en courant la partie de communication (59) pendant la durée d'un temps d'activation à un temps de désactivation, le temps d'activation et le temps de désactivation étant entrés par la partie d'entrée (53) ou le terminal de commande à distance (9),
le deuxième dispositif de commande (7) transmettant au terminal de commande à distance (9) un message indiquant que la partie de communication est activée, pendant l'étape d'alimentation en courant de partie de communication.

10. Appareil électronique selon la revendication 9, où la première partie de charge comprend un moteur pour l'entraînement en rotation d'un tambour (24) fournissant un espace de réception de vêtements et/ou une vanne pour l'ouverture et la fermeture d'un conduit de refoulement d'eau (31) reliant un espace de logement du tambour (24) et une source d'alimentation en eau et/ou une pompe de vidange (43) pour la vidange de l'eau contenue dans l'espace de logement du tambour.

11. Appareil électronique selon la revendication 9, où la première partie de charge comprend un moteur pour l'entraînement en rotation d'un tambour (24) fournissant un espace de réception de vêtements et/ou une partie de refoulement d'air destinée à refouler de l'air chauffé vers le tambour (24).

12. Appareil électronique selon la revendication 9, la première partie de charge comprend une pompe d'aspersion d'eau vers un objet à laver et/ou un dispositif de chauffage de l'eau alimentant la pompe.

13. Appareil électronique selon la revendication 9, où la première partie de charge comprend un dispositif de chauffage d'un espace destiné à contenir un objet à chauffer et/ou un ventilateur de circulation ou de refoulement de l'air vers ou depuis l'espace contenant l'objet à chauffer.
